## Europäisches Patentamt

## European Patent Office

## Office européen des brevets

(11) Veröffentlichungsnummer: **0 249 067**
**B1**

(12) **EUROPÄISCHE PATENTSCHRIFT**

(45) Veröffentlichungstag der Patentschrift:
12.09.90

(51) Int. Cl.⁵: **F16L 55/04**, F17D 1/20,
F16K 47/00

(21) Anmeldenummer: 87107342.5

(22) Anmeldetag: 20.05.87

(54) Vorrichtung zum Dämpfen von Druckstössen in Rohrleitungen, insbesondere Sanitärinstallationen.

(30) Priorität: 11.06.86 CH 2362/86

(43) Veröffentlichungstag der Anmeldung:
16.12.87 Patentblatt 87/51

(45) Bekanntmachung des Hinweises auf die Patenterteilung:
12.09.90 Patentblatt 90/37

(84) Benannte Vertragsstaaten:
AT CH DE ES FR IT LI NL SE

(56) Entgegenhaltungen:
FR-A- 2 443 637
US-A- 4 186 775
US-A- 4 287 917
US-A- 4 523 612

(73) Patentinhaber: R. Nussbaum AG,
Martin-Disteli-Strasse 26, CH-4601 Olten(CH)

(72) Erfinder: Martin, Kurt, Hofmattweg 2,
CH-4450 Sissach(CH)

(74) Vertreter: Keller, René, Dr. et al, Patentanwälte Hartmut
Keller, Dr. René Keller Postfach 12, CH-3000 Bern 7(CH)

## Beschreibung

Die Erfindung betrifft eine Vorrichtung zum Dämpfen von Druckstössen in Rohrleitungen, insbesondere Sanitärinstallationen, gemäss dem Oberbegriff des Patentanspruchs 1.

Eine Vorrichtung dieser Art ist aus der US-A 4 186 775 bekannt. Sie hat ein Gehäuse, deren beide Stirnseiten je eine Bohrung aufweisen und zum Anschluss von Flanschen von Leitungsrohren ausgebildet sind. Zwischen den beiden Bohrungen erstreckt sich ein perforiertes Rohr, um das ein ringförmiger Gehäuseraum verläuft, der aussen durch die Gehäusewandung begrenzt und innen durch einen gummielastischen Schlauch zum Rohr hin abgedichtet ist, und der durch eine mit einem Zapfen verschliessbare Öffnung in der Gehäusewandung mit Druckgas gefüllt ist.

Ähnliche Vorrichtungen, bei denen ein elastisch zusammendrückbares Gas- oder Luftpolster nicht direkt im durchströmten Wasserweg sondern in einem um einen rohrförmigen Durchgang herum verlaufenden Ringraum oder in einem ausserhalb eines Rohrs vorgesehenen und durch einen radialen Verbindungskanal mit diesem in Verbindung stehenden Windkessel angeordnet ist, sind bekannt z. B. aus der DE-A 1 59 030, DE-A 2 239 618, DE-U 1 775 856, DE-U 7 726 438, DE-C 2 604 006, DE-A 3 300 500, FR-A 2 443 637, SU-A 1 149 098, US-A -4 523 612, US-A- 4 287 917, US-A3 061 039, US-A 3 556 159, US-A 2 968 319 und US-A 4 628 964.

Aus der DE-A 3 414 887 und der CH-A 654 092 sind weiter Vorrichtungen bekannt, bei denen ein schlauchförmiger, mit Druckgas gefüllter, elastischer Strumpf in der Achse eines rohrförmigen Gehäuses angeordnet ist, wobei der Durchmesser des Strumpfes kleiner als der Rohrdurchmesser ist, so dass die Flüssigkeit durch den Ringraum zwischen dem Strumpf und der Rohrwandung hindurch strömen kann.

Ein auch für hohe Druckstösse ausreichendes Dämpfungsvolumen lässt sich bei allen diesen Vorrichtungen, wenn überhaupt, nur durch ein entweder sehr langes oder sehr breites Gehäuse erreichen, das sich namentlich nicht oder nur mit grossem baulichen Aufwand nachträglich in bestehende Installationen einsetzen lässt. Ausserdem ist die Herstellung der bekannten Vorrichtungen aufwendig und falls der Druck nachlässt, muss die ganze Vorrichtung abmontiert und ausgewechselt werden.

Ferner sind Vorrichtungen anderer Art bekannt (z.B. US-A 3 621 882), bei denen ein gummielastischer Ballon (ein "Luftballon ") lose in einem mit zwei Anschlusstutzen versehenen Gehäuse liegt. Der rundum aus gummielastischem Material bestehende Ballon wird durch die strömende Flüssigkeit zum Ausgangsstutzen befördert und verformt sich dort unter dem Durchflussdruck der strömenden Flüssigkeit, so dass sich der freie Durchflussquerschnitt mit zunehmender Strömung verringert und sogar die Gefahr besteht, dass der Ballon den Durchfluss gänzlich verstopft. Beides lässt sich auch durch Nocken an der Gehäuseinnenwandung (vgl. US-A3 621 882) nicht vermeiden, da sich der Ballon unter der Wirkung der auf ihn zu strömenden Flüssigkeit zwischen den Nocken zur Gehäusewandung hin ausbauchen kann.

Hier will die Erfindung Abhilfe schaffen. Ihr liegt die Aufgabe zugrunde, eine mühelos auch nachträglich in bestehende Installationen einsetzbare, einfache und preiswerte Vorrichtung zu schaffen, welche durch Schnellschlussorgane verursachte Druckstösse so weit reduziert, dass die Gefahr von Beschädigungen der Installation zuverlässig vermieden wird.

Die erfindungsgemässe Lösung dieser Aufgabe ist Gegenstand des Anspruchs 1. Bevorzugte Ausführungsarten sind in den Ansprüchen 2–12 umschrieben.

Die erfindungsgemässe Vorrichtung kann auch nachträglich leicht ohne Änderung der Installation eingebaut werden, namentlich kann der den Hohlraum umgreifende Gehäuseteil wie eine Rosette formschön gestaltet ausserhalb des Mauerwerks montiert werden. Die Kapsel wird vor dem Einsetzen in das Gehäuse vollständig fertiggestellt und mit Druckluft gefüllt. Sie wird dann einfach in den einen Gehäuseteil eingesetzt und dieser mit dem anderen zur fertigen Vorrichtung zusammengesetzt.

In den Figuren 1–5 sind Längsschnitte durch die Dämpfungsvorrichtungen dargestellt, die nicht den Gegenstand der Erfindung bilden, aber zur Beschreibung des Anwendungsgebietes beitragen.

Fig. 6 zeigt einen Längsschnitt durch ein Ausführungsbeispiel der erfindungsgemässen Vorrichtung, Fig. 7 schematische Darstellungen der mit unterschiedlichen Anschlussstutzen ausgerüsteten Vorrichtung von Fig. 6 mit Beispielen von an die Stutzen anzuschliessenden Anschlusstücken.

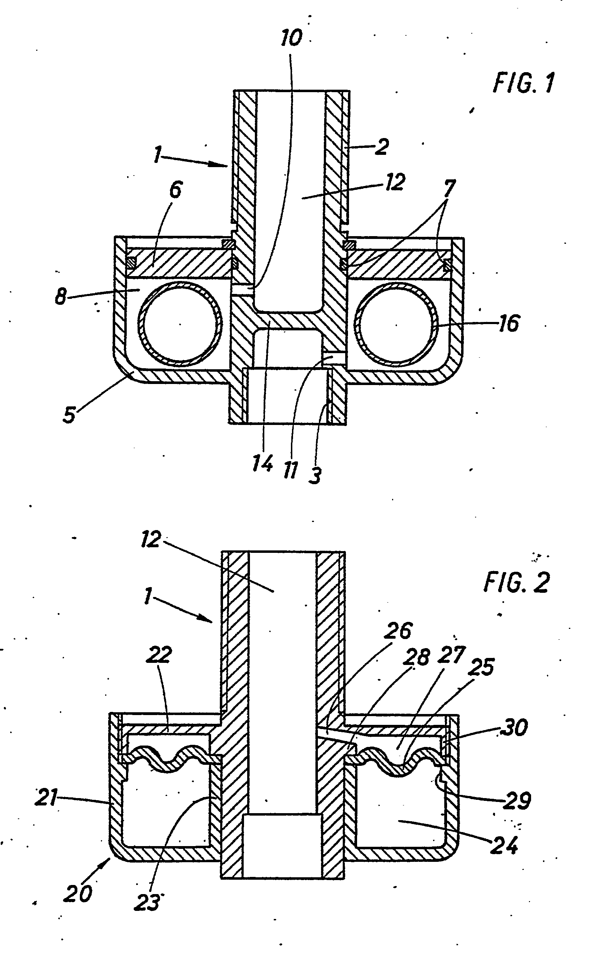

Die in Fig. 1 dargestellte Vorrichtung hat ein Rohrleitungsstück 1, das an beiden Enden mit Anschlussgewinden 2, 3 versehen und dazu bestimmt ist, in eine Frischwasserleitung einer Sanitärinstallation (Hausinstallation) nahe einem Schnellschlussorgan, z.B. zwischen den Ausgang der Wasserleitung und den Eingang eines Hebelmischers, eingesetzt zu werden. Der mittlere Teil des Rohrleitungsstücks 1 ist von einem ringförmigen Gehäuseteil umschlossen, der aus einstückig mit dem Rohrleitungsstück 1 gebildeten Topf 5 und einem Deckel 6 besteht, der durch Dichtungsringe 7 am Topfrand und am Rohrmantel abgedichtet ist. Der zwischen dem Gehäuseteil 5, 6 und dem Rohrmantel gebildete Ringraum 8 steht durch zwei in Längsrichtung des Rohrleitungsstücks 1 gegeneinander versetzte Oeffnungen 10, 11 mit dem Innenraum 12 des Rohrleitungsstücks 1 in Verbindung. Der Innenraum 12 ist durch eine zwischen den beiden Oeffnungen 10, 11 angeordnete Trennwand 14 unterteilt, so dass das Wasser zwangsläufig durch den Ringraum 8 strömt. Im Ringraum 8 ist ein mit Druckluft gefüllter Schlauchring 16 aus gummielastischem Material angeordnet. Der Luftdruck im Schlauchring 16 ist etwa gleich gross bemessen wie der Fliessdruck im Rohrleitungsnetz. Um die Dichtigkeit des Schlauchrings auch über sehr lange Zeit sicherzustellen, d. h. eine Diffusion der Luft durch den Schlauchring zu verhindern, kann das gummielastische Material mit einer dünnen Schicht z.B. aus Aluminium beschichtet sein.

Die Vorrichtung kann ohne weiteres nachträglich in eine bestehende Sanitärinstallation eines Badezimmers, einer Küche usw. eingesetzt werden, ohne dass das Mauerwerk oder die Mauerverkleidung (Platten, Kacheln) aufgebrochen werden müsste. Man braucht lediglich das Anschlussstück der Armatur von der Wasserleitung abzuschrauben, die Vorrichtung 1 mit dem Anschlussgewinde 2 in die Wasserleitung einzuschrauben bis der Gehäuseteil 5 mit seiner Deckelseite 6 am Mauerwerk bzw. der Mauerverkleidung anliegt, und die Armatur mit Hilfe eines entsprechend bemessenen, in das Anschlussgewinde 3 eingeschraubten Anschlussstücks mit der Vorrichtung zu verbinden. Der Gehäuseteil 5 liegt dann - ästhetisch schön - wie eine übliche Rosette auf dem Mauerwerk bzw. der Mauerverkleidung.

Um den Strömungswiderstand herabzusetzen, kann die Trennwand 14 mit einem Durchlass versehen sein, so dass der Raum 8 einen Nebenschluss bildet.

Bei der in Fig. 2 dargestellten Variante besteht der das Rohrleitungsstück 1 umschliessende Gehäuseteil aus einem im Querschnitt U-förmigen Ring 20, dessen äusserer Schenkel 21 auf eine einstückig am Rohrstück 1 gebildete Ringschulter 22 geschraubt ist, und dessen innerer Schenkel 23 am Rohrmantel anliegt. Im durch den Ring 20 und die Ringschulter 22 umschlossenen Ringraum ist eine Kammer 24 gebildet, welche durch eine ringförmige Membran 25 aus gummielastischem Material vom übrigen, durch eine Bohrung 26 mit dem Inneren 12 des Rohrleitungsstücks in Verbindung stehenden Teil 27 des Ringraums abgeschlossen ist. Der innere Umfangsrand der ringförmigen Membran 25 ist zwischen dem inneren Schenkel 23 des Rings 20 und einem am Rohrmantel gebildeten Vorsprung 28, der äussere Umfangsrand ist zwischen einem Vorsprung 29 am Schenkel 21 und dem abgewinkelten Rand 30 der Ringschulter 22 festgeklemmt. Die Kammer 24 ist mit Druckluft gefüllt, wobei der Luftdruck (bei der fertiggestellten, aber noch nicht ins Rohrleitungsnetz eingesetzten Vorrichtung) etwa dem Betriebsdruck im Rohrleitungsnetz entspricht. Die Breite des Membranrings 25 ist grösser als der Abstand zwischen den Klemmstellen, an denen ihre Umfangsränder eingeklemmt sind, so dass die Membran bei gleichem Druck in der Kammer 24 und dem Raum 27 die in der Zeichnung dargestellte Balgform einnimmt. Sinkt der Druck, baucht sich die Membran 25 in Fig. 2 nach oben aus, steigt er, baucht sie sich nach unten aus und dehnt sich bei weiterem Anstieg des Drucks immer tiefer in die Kammer 24 hinein.

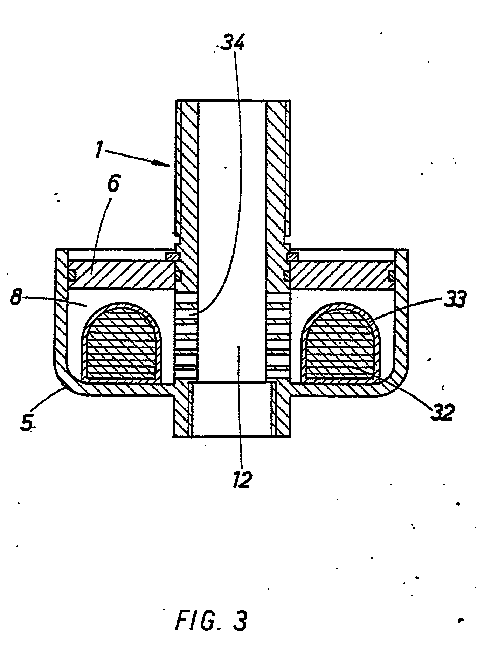

Bei der in Fig. 3 dargestellten Variante ist der das Rohrleitungsstück 1 umschliessende Gehäuseteil 5, 6 gleich wie bei der Ausführungsform von Fig. 1 ausgebildet. Im Ringraum 8 ist anstelle des mit Luft gefüllten Schlauchrings 16 ein aus elastischem, offenzelligem Schaumstoff gebildeter Ring 32 angeordnet. Der offenzellige Schaumstoff ist mit einer wasserdichten Schicht 33 überzogen und diese ist an den Boden des Topfes 5 geklebt. (Wenn anstelle des offenzelligen Schaumstoffs ein geschlossenzelliger Schaumstoff verwendet wird, kann der Ueberzug 33 entfallen). Der gesamte, den Ringraum 8 innen begrenzende Abschnitt des Rohrleitungsstücks 1 ist mit in kleinen Abständen voneinander angeordneten Durchlässen 34 versehen, so dass der Ringraum 8 wie durch ein Gitter oder Netz mit dem Inneren 12 des Rohrleitungsstücks 1 in Verbindung steht.

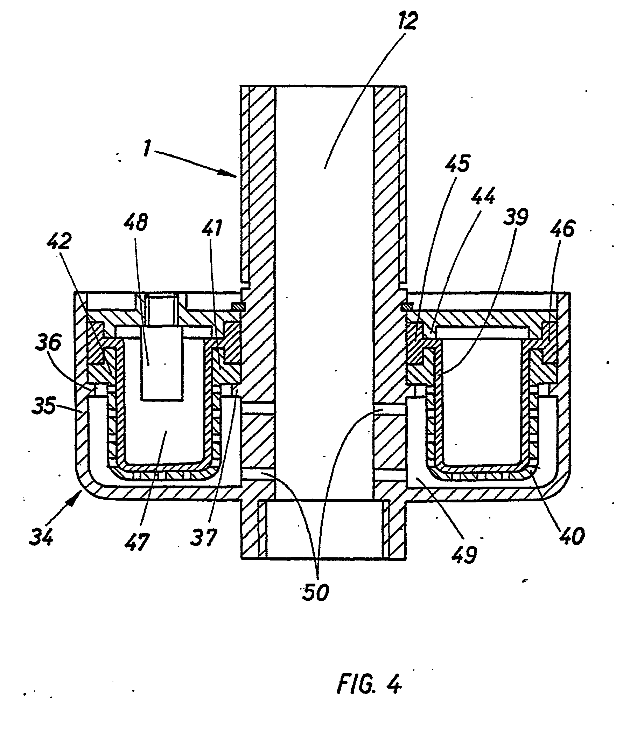

Bei der in Fig. 4 dargestellten Variante haben der das Rohrleitungsstück 1 umschliessende, topfförmige Gehäuseteil 34 an der Innenseite seiner Wandung 35 und das Rohrleitungsstück 1 an der Aussenseite seines Rohrmantels je einen ringförmigen Vorsprung 36, 37. Eine Ringmembran oder Manschette 39 ist in einem im Querschnitt hutförmigen Ringsieb 40 gefasst, dessen innerer und äusserer Umfangsrand 41, 42 auf den Vorsprüngen 36, 37 aufliegt. Der Gehäuseteil 34 ist durch einen eingepressten und durch einen Seeger-Ring gesicherten Deckel 44 abgeschlossen, der die Ränder 45, 46 der Manschette 39 dicht an die Gehäuse- und Rohrwandung sowie die Umfangsränder 41, 42 des Siebs 42 presst. Zum Füllen der zwischen dem Deckel 44 und der Manschette 39 gebildeten, ringförmigen Kammer 47 mit Druckluft ist im Deckel 44 ein Rückschlagventil 48 vorgesehen. Der Luftdruck in der Kammer 47 der fertiggestellten, aber noch nicht ins Rohrleitungsnetz eingesetzten Vorrichtung ist gleich oder etwas kleiner als der Fliessdruck im Rohrleitungsnetz bemessen. Der zwischen der Rohr- und Gehäusewandung sowie dem Sieb 40 gebildete, im Querschnitt U-förmige Ringraum 49 ist durch mehrere, in Längsrichtung des Rohrleitungsstücks 1 gegeneinander versetzte Oeffnungen 50 mit dem Innenraum 12 des Rohrleitungsstücks 1 verbunden. Das Sieb 40 begrenzt das Aufblähen der Manschette 39, so dass eine Ueberbeanspruchung bzw. Ueberdehnung verhindert wird, und der freie U-Ringraum 49 zwischen der Rohr- und Gehäusewandung sowie der Manschette 39 und deren Hut- bzw. U-Querschnittsform ergeben eine gleichmässige Druckverteilung auf die Manschette sowie eine grosse Oberfläche derselben.

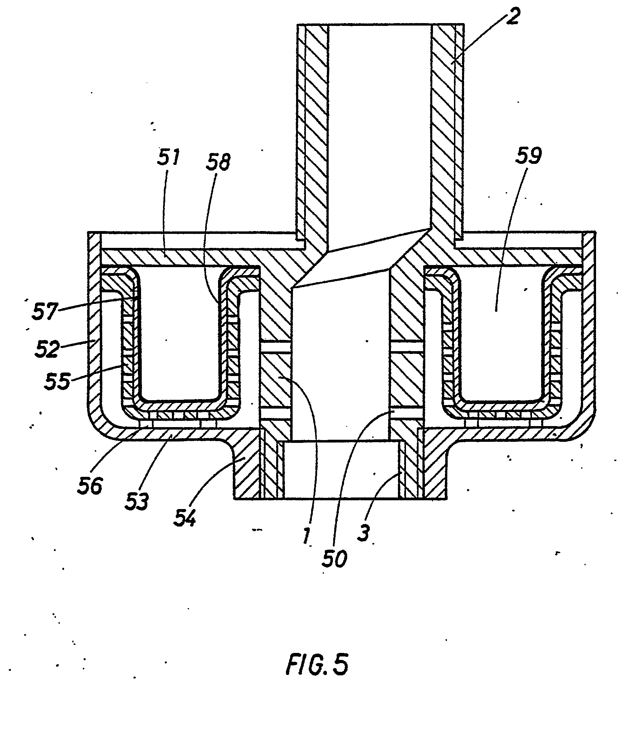

Bei der in Fig. 5 dargestellten Variante hat das Gehäuse zwei axial gegeneinander versetzte Anschlussstutzen 2, 3. Das die Stutzen 2, 3 verbindende Rohrstück 1 hat angrenzend an den Stutzen 2 einen Flansch 51, in dem ein (nicht dargestelltes) Rückschlagventil angeordnet ist. Ein topfförmiger Gehäuseteil 52 hat in der Mitte seines Bodens 53 einen mit einem Innengewinde versehenen Stutzen 54, der auf ein Aussengewinde des Anschlussstutzens 3 geschraubt ist. Auf der Innenseite des Topfbodens 53 ist ein im Querschnitt hutförmiges Ringsieb 55 mittels Füssen 56 abgestützt. Im Ringsieb 55 ist eine im Querschnitt ebenfalls hutförmige Manschette gelagert. Die Manschette besteht aus einem gummielastischen Material 57, das an der Innenseite mit einer Aluminiumschicht 58 beschichtet ist. Die Manschette 57, 58 und der Flansch 51 umschliessen eine durch das Rückschlagventil im Flansch 51 mit Druckluft gefüllte Kammer 59. Die Dichtigkeit der Kammer 59 ist dadurch gewährleistet, dass der Rand der Manschette 57, 58 vom Rand des Ringsiebs 55 an den Flansch 51 gepresst ist. Die Pressung erfolgt beim Anschrauben des Stutzens 54 auf den Anschlussstutzen 3, indem der Topfboden 53 das mit den Füssen 56 versehene Sieb 55 nach oben gegen den Flansch 51 presst. Der gummielastische Teil 57 der Manschette besteht zweckmässig aus einem im Pressverfahren geformten Elastomer (z.B. Nitrilkautschuk NBR, Polyolefinkautschuk EPDM). Die Aluminiumschicht 58 kann aus einer tiefgezogenen Aluminiumfolie bestehen, die in den Teil 57 eingesetzt und vorzugsweise zumindest am Rand mit dem Teil 57 verklebt oder verschweisst (versiegelt) ist. Die Aluminiumschicht 58 kann auch auf den Manschettenteil 57 aufgedampft sein, entweder nur an der Innenseite oder zusätzlich auch noch an der Aussenseite. Die Aluminiumschicht 58 gewährleistet, dass der Luftdruck in der Kammer 59 während praktisch unbegrenzter Zeit zuverlässig aufrechterhalten wird, d.h. keine Luftdiffusion durch Poren des gummielastischen Teils 57 stattfinden kann. Die Aluminiumfolie bzw. -schicht 58 ist dabei so dünn zu wählen, dass sie die Verformbarkeit des gummielastischen Teils 57 praktisch nicht beeinträchtigt. Die auf eine sehr geringe Dicke ausgewalzte und tiefgezogene Aluminiumfolie kann nach dem Tiefziehen weichgeglüht werden, damit sie die ihr durch das Auswalzen und Tiefziehen verliehene Steifigkeit wieder verliert, d.h möglichst gut biegsam wird. Der gummielastische Teil 57 könnte aus den genannten Gründen auch mit einem anderen porenfreien Material (einem anderen Metall oder einem geeigneten Kunststoff) beschichtet sein. Aluminium ist aber sowohl hinsichtlich der Dichtigkeit als auch der Verformbarkeit besonders gut geeignet.

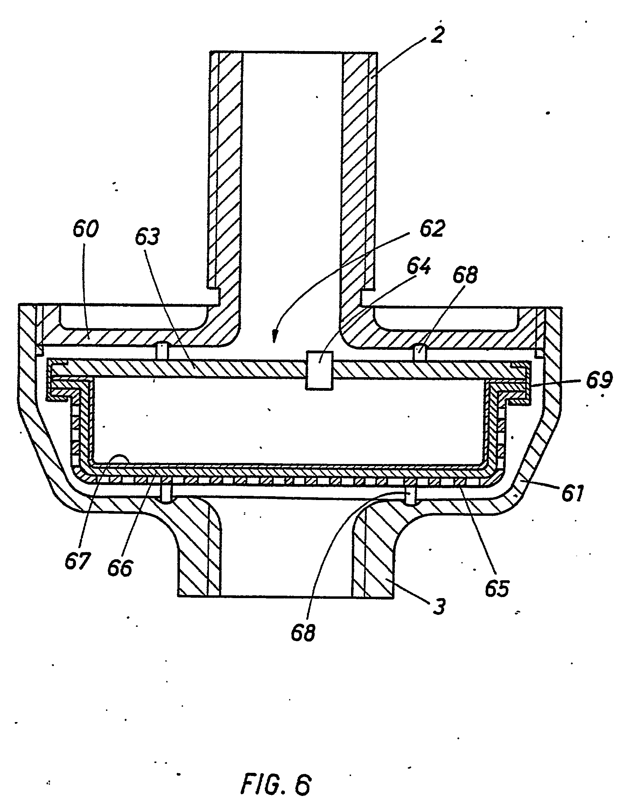

Bei der in Fig. 6 dargestellten, erfindungsgemässen Vorrichtung besteht das Gehäuse aus zwei Teilen. Der erste Teil hat einen in eine Wasserleitung zu schraubenden Anschlussstutzen 2, an dem ein Flansch 60 mit Aussengewinde gebildet ist. Der zweite Teil hat einen an ein Anschlussstück einer Armatur anzuschliessenden Stutzen 3, der im Boden eines topfförmigen Gehäuseteils 61 gebildet ist. Der Rand des topfförmigen Gehäuseteils 61 ist mit einem Innengewinde versehen und auf das Aussengewinde des Flanschs 60 geschraubt. In den Innenraum des Gehäuseteils 61 ist eine Kapsel 62 eingesetzt. Die Kapsel 62 hat einen Deckel 63, in dem ein Füllstützen oder ein Rückschlagventil 64 sitzt, und ein hutförmiges Sieb 65, in dem eine ebenfalls hutförmige Membran gelagert ist. Die Membran besteht ebenso wie die Manschette 57, 58 in Fig. 5 aus einem gummielastischen Material 66, dessen Innenseite mit einer Aluminiumschicht 67 beschichtet ist. Die Dicke und der Durchmesser der Kapsel 62 sind kleiner bemessen als der Raum zwischen dem Gehäuseteil 61 und dem Flansch 60. Am Deckel 63 und am Siebboden 65 sind Stege 68 angebracht, die in Vertiefungen des Gehäuseteils 61 und des Flansches 60 greifen und die Kapsel 62 in einem Abstand vom Flansch 60 und dem Gehäuseteil 61 halten, so dass das Wasser vom Stutzen 2 um die Kapsel 62 herum durch den Innenraum des Gehäuseteils 61 in den Stutzen 3 strömen kann. Die Ränder des Siebs 65, der Membran 66, 67 und des Deckels 63 sind dicht miteinander verklebt oder verschweisst und zusätzlich mit einem Dichtungsring 69 abgedichtet. Die vom Deckel 63 und der Membran 66, 67 umschlossene Kapselkammer ist mit Druckluft gefüllt.

Die Kapsel 62 wird vor dem Einsetzen in das Gehäuse vollständig fertiggestellt und durch den Einfüllstutzen 64 mit Druckluft gefüllt, worauf der Einfüllstutzen mit Dichtungsmasse versiegelt wird. Die Kapsel 62 wird dann in den Gehäuseteil 61 eingesetzt und dieser mit dem Innengewinde seines Rands auf das Aussengewinde des Flanschs 60 geschraubt. Dabei wird der Rand der Membran 66, 67 zwischen den Rändern des Deckels 63 und des Siebs 65 zusammengepresst, weil der Boden des Gehäuseteils 61 das Sieb 65 über die Stege 68 gegen den mit den Stegen 68 am Flansch 60 abgestützten Deckel 63 presst. Durch diese Verpressung bleibt die Dichtigkeit der Verbindung der Membran 66, 67 mit dem Deckel 63 über praktisch unbegrenzte Zeit gesichert.

Das Luftpolster in der Kapsel 62 mit der Membran 66, 67 reduziert die in Hausinstallationen infolge des raschen Schliessens von Schnellverschlussorganen, z. B. Hebelmischern, entstehenden Druckstösse, wobei es den Druckstoss sehr rasch aufnimmt. Da der Hohlraum für die Kapsel 62 in den radial über die Rohranschlussteile 2, 3 vorstehenden Gehäuseteilen gebildet ist, lässt sich die Kapsel und das darin befindliche Luftpolster genügend gross bemessen, um auch sehr hohe Druckstösse ausreichend zu reduzieren. Für die Druckreduzierung kommt es entscheidend sowohl auf die Grösse des zusammenpressbaren Luftvolumens als auch der verformbaren Fläche (elastische bzw. biegsame Wandung 66/67) an. Die Druckstossdämpfung ist umso besser, je grösser das Volumen und die verformbare Fläche sind. Vorzugsweise ist der Aussendurchmesser des Gehäuseteils, in dem der Raum für die Aufnahme der Kapsel gebildet ist, mindestens doppelt so gross wie der Aussendurchmesser der Anschlussstutzen. Beim Ausführungsbeispiel beträgt der Aussendurchmesser des Gehäuseteils 61 das Dreifache des Aussendurchmessers der Stutzen 2, 3. Der Gehäuseteil 61 kann, wie dargestellt, formschön gestaltet und ausserhalb des Mauerwerks wie eine Rosette montiert werden. Die dargestellte Vorrichtung kann auch nachträglich leicht ohne Änderung der Installation eingebaut werden.

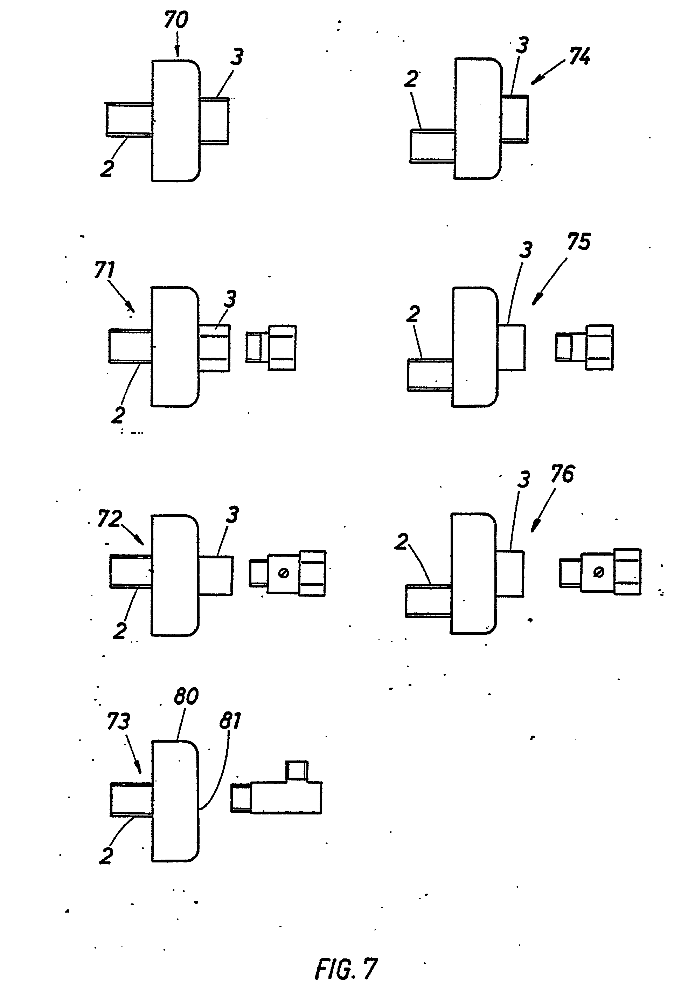

Fig. 7 zeigt schematisch, wie man die Vorrichtung zum Anschluss verschiedener Anschlussstücke ausgestalten kann. Die Vorrichtungen 70-72 haben entsprechend dem Ausführungsbeispiel von Fig. 6 zum Anschlussstutzen 2 für die Wasserleitung koaxiale Anschlussstutzen 3, die je nach dem vorgesehenen Anschlussstück mit Aussengewinde (Stutzen 3 von 70) oder Innengewinde (Stutzen 3 von 71 und 72) ausgeführt sind. Die Vorrichtung 73 hat im Gehäuseteil 80 ein zum Anschlussstutzen 2 für die Wasserleitung koaxiales Innengewinde 81 für das Einschrauben z. B. eines Eckstücks. Die Vorrichtungen 74–76 haben axial gegeneinander versetzte Anschlussstutzen 2, 3 und sind zum Anschluss von Warm- und Kaltwasserarmaturen mit unterschiedlichem Installationsstichmass bestimmt, wobei der Abstand der Stutzen 3 zweier nebeneinander montierter Vorrichtungen 74–76 durch entsprechendes Drehen der beiden Vorrichtungen einstellbar ist.

**Patentansprüche**

1. Vorrichtung zum Dämpfen von Druckstössen in Rohrleitungen, insbesondere Sanitärinstallationen, mit einem Gehäuse (2, 3, 60, 61), das zwei Rohranschlussteile (2, 3) und einen mit diesen in Verbindung stehenden Raum aufweist, in dem eine mit Druckgas, z.B. Druckluft, gefüllte, einen biegsamen und/oder elastischen (66, 67) sowie einen festen Wandungsteil (63) aufweisende Kammer angeordnet ist, dadurch gekennzeichnet, dass das Gehäuse aus zwei zusammengesetzten Teilen (2, 60; 3, 61) besteht, deren einer (2, 60) den einen Rohranschlussteil (2) und deren anderer (3, 61) den anderen Rohranschlussteil (3) aufweist und die zusammen einen zwischen den Rohranschlussteilen (2, 3) liegenden und sich radial über diese hinaus erstreckenden Hohlraum umschliessen, in den eine Kapsel (62) eingesetzt ist, die durch Distanzstücke (68) im Abstand von der Gehäusewandung (60, 61) gehalten ist, damit die Flüssigkeit vom einen Rohranschlussteil (2) um die Kapsel (62) herum in den anderen Rohranschlussteil (3) strömen kann, und in der die mit Druckgas, z. B. Druckluft, gefüllte Kammer mit dem biegsamen und/oder elastischen (66, 67) sowie dem festen Wandungsteil (63) gebildet ist.

2. Vorrichtung nach Anspruch 1, dadurch gekennzeichnet, dass die beiden Gehäuseteile (2, 60, 3, 61) lösbar zusammengesetzt, z.B. miteinander verschraubt sind, damit die Kapsel (62) ausgewechselt werden kann.

3. Vorrichtung nach Anspruch 1 oder 2, dadurch gekennzeichnet, dass der Durchmesser des Hohlraums grösser als dessen axiale Abmessung ist.

4. Vorrichtung nach einem der Ansprüche 1–3, dadurch gekennzeichnet, dass der eine Gehäuseteil (2, 60) einen am einen Rohranschlussteil (2) gebildeten Flansch (60) und der andere Gehäuseteil (3, 61) einen topfförmigen Teil (61) hat, in dessen Topfboden der andere Rohranschlussteil (3) gebildet ist, wobei der Flansch (60) und der topfförmige Teil (61) den Hohlraum begrenzen und der Aussendurchmesser des topfförmigen Teils (61) vorzugsweise mindestens doppelt so gross wie der Aussendurchmesser der Rohranschlussteile (2, 3) ist.

5. Vorrichtung nach einem der Ansprüche 1–4, dadurch gekennzeichnet, dass der biegsame und/oder elastische Kammerwandungsteil aus einem gummielastischen Material (66), vorzugsweise einem Elastomer, besteht, das mindestens an einer Seite mit Metall (67), vorzugsweise mit einer Aluminiumfolie, beschichtet ist.

6. Vorrichtung nach einem der Ansprüche 1–5, dadurch gekennzeichnet, dass der biegsame und/oder elastische Kammerwandungsteil (66, 67) in einem siebartigen Teil (65) der Kapsel (62) angeordnet ist.

7. Vorrichtung nach Anspruch 6, dadurch gekennzeichnet, dass der siebartige Teil (65) zusammen mit einem Deckel (63) das Kapselgehäuse (62) bildet.

8. Vorrichtung nach Anspruch 7, dadurch gekennzeichnet, dass der Deckel (63) dem mit einer Wasserleitung zu verbindenden Rohranschlussteil (2) und der siebartige Teil (65) dem mit einer Armatur oder einem Anschlussstück zu verbindenden Rohranschlussteil (3) zugewandt ist.

9. Vorrichtung nach Anspruch 7 oder 8, dadurch gekennzeichnet, dass der Deckel (63) den festen Wandungsteil (63) der Kammer bildet und mit einem Füllstutzen oder einem Rückschlagventil (64) für das Einfüllen des Druckgases bzw. der Druckluft ausgerüstet ist.

10. Vorrichtung nach einem der Ansprüche 6–9, dadurch gekennzeichnet, dass der siebartige Teil (65) hutförmig ist.

11. Vorrichtung nach Anspruch 10, dadurch gekennzeichnet, dass der biegsame und/oder elastische Kammerwandungsteil (66, 67) ebenfalls hutförmig ausgebildet und sein Rand zwischen dem Rand des hutförmigen, siebartigen Kapselteils (65) und dem Rand des Deckels (63) angeordnet und dicht mit dem letzteren verbunden ist, und dass die beiden Gehäuseteile (2, 60, 3, 61) zusammengeschraubt sind, derart, dass der Rand des biegsamen und/oder elastischen Kammerwandungsteils (66, 67) durch das Zusammenschrauben der beiden Gehäuseteile (2, 60, 3, 61) zwischen den Rändern des Deckels (63) und des siebartigen Kapselteils (65) zusammengepresst ist, um durch diese Verpressung die Dichtigkeit der Verbindung des biegsamen und/ oder elastischen Kammerwandungsteils (66, 67) mit dem Deckel (63) zu sichern.

12. Vorrichtung nach einem der Ansprüche 1–11, dadurch gekennzeichnet, dass der Druck des Gases bzw. der Luft, mit dem bzw. der die Kammer gefüllt ist, annähernd gleich gross wie der Fliessdruck im Rohrleitungsnetz ist.

**Claims**

1. Apparatus for attenuating pressure surges in pipes, in particular sanitary installations, having a housing (2, 3, 60, 61) comprising two pipe connection parts (2, 3) and a space which is connected thereto and in which a chamber is disposed which is filled with a pressure gas, for example, compressed air, and comprises a flexible and/or resilient wall section (66, 67) as well as a rigid wall section (63), characterised in that the housing consists of two assembled parts (2, 60; 3, 61), one (2, 60) of which comprises one pipe connection part (2) and the other (3, 61) comprises the other pipe connection part (3), and which together surround a hollow space which lies between the pipe connection parts (2, 3), extends radially beyond these parts, and in which a capsule (62) is inserted which is held by distance pieces (68) at a distance from the housing wall (60, 61), in order that the fluid from one pipe connection part (2) can flow around the capsule (62) into the other pipe connection part (3), and in which the chamber filled with pressure gas, for example compressed air, is formed by the flexible and/or resilient wall section (66, 67) as well as the rigid wall section (63).

2. Apparatus as claimed in claim 1, characterised in that the two housing parts (2, 60, 3, 61) are detachably connected, for example, screwed, together in order that the capsule (62) can be replaced.

3. Apparatus as claimed in claim 1 or 2, characterised in that the diameter of the hollow space is greater than the axial dimension thereof.

4. Apparatus as claimed in one of claims 1 to 3, characterised in that one housing part (2, 60) has a flange (60) formed on one pipe connection part (2) and the other housing part (3, 61) has a cup-shaped part (61) in the floor of which the other pipe connection part (3) is formed, the flange (60) and the cup-shaped part (61) defining the hollow space and the outer diameter of the cup-shaped part (61) preferably being at least twice as large as the outer diameter of the pipe connection parts (2, 3).

5. Apparatus as claimed in one of claims 1 to 4, characterised in that the flexible and/or resilient chamber wall part consists of a rubber elastic material (66), preferably an elastomer, which is coated on at least one side with metal (67), preferably with an aluminium foil.

6. Apparatus as claimed in one of claims 1 to 5, characterised in that the flexible and/or resilient chamber wall part (66, 67) is disposed in a sieve-like section (65) of the capsule (62).

7. Apparatus as claimed in claim 6, characterised in that the sieve-like section (65) forms the capsule housing (62) with a lid (63).

8. Apparatus as claimed in claim 7, characterised in that the lid (63) faces the pipe connection part (2), which is to be connected to a water conduit, and the sieve-like section (65) faces the pipe connection part (3) which is to be connected to a fitting or a connection piece.

9. Apparatus as claimed in claim 7 or 8, characterised in that the lid (63) forms the rigid wall section (63) of the chamber and is equipped with a filler cap or a non-return valve (64) for filling the pressure gas or compressed air.

10. Apparatus as claimed in one of claims 6 to 9, characterised in that the sieve-like part (65) is in the form of a hat.

11. Apparatus as claimed in claim 10, characterised in that the flexible and/or resilient chamber wall part (66, 67) is likewise in the form of a hat and its edge is disposed between the edge of the hat-shaped, sieve-like capsule section (65) and the edge of the lid (63) and is connected in a leaktight manner to the latter; and in that the two housing parts (2, 60, 3, 61) are screwed together in such a way that the edge of the flexible and/or resilient chamber wall part (66, 67) is compressed between the edges of the lid (63) and the sieve-like capsule section (65) as a result of the two housing parts (2, 60, 3, 61) being screwed together, in order to ensure by means of this compression that the connection between the flexible and/or resilient chamber wall part (66, 67) and the lid (63) is leaktight.

12. Apparatus as claimed in one of claims 1 to 11, characterised in that the pressure of the gas or air filling the chamber is approximately as great as the hydraulic pressure in the pipe system.

**Revendications**

1. Dispositif pour amortir des coups de bélier dans des conduits tubulaires, notamment des installations sanitaires, présentant un carter (2, 3, 60, 61) qui comprend deux pièces tubulaires de raccordement (2, 3) et un espace communiquant avec ces dernières, et dans lequel se trouve un compartiment qui est empli d'un gaz comprimé, par exemple de l'air comprimé, et possède une partie de paroi (66, 67) souple et/ou élastique, ainsi qu'une partie de paroi rigide (63), caractérisé par le fait que le carter se compose de deux parties assemblées (2, 60; 3, 61) dont l'une (2, 60) présente l'une (2) des pièces tubulaires de raccordement, et dont l'autre (3, 61) présente l'autre pièce tubulaire de raccordement (3), ces parties ceinturant conjointement une cavité qui se trouve entre les pièces tubulaires de raccordement (2, 3), en fait saillie dans le sens radial, et dans laquelle est intégrée une capsule (62) retenue à distance de la paroi (60, 61) du carter, par l'intermédiaire d'organes d'espacement (68), de telle sorte que le liquide puisse affluer de l'une (2) des pièces tubulaires de raccordement dans l'autre pièce tubulaire de raccordement (3), tout autour de la capsule (62), capsule dans laquelle le compartiment empli d'un gaz comprimé, par exemple d'air comprimé, est formé avec la partie de paroi (66, 67) souple et/ou élastique, ainsi qu'avec la partie de paroi rigide (63).

2. Dispositif selon la revendication 1, caractérisé par le fait que les deux parties de carter (2, 60, 3, 61) sont assemblées de manière libérable, par exemple solidarisées par vissage, de telle sorte que la capsule (62) puisse être remplacée.

3. Dispositif selon la revendication 1 ou 2, caractérisé par le fait que le diamètre de la cavité est plus grand que la dimension axiale de cette dernière.

4. Dispositif selon l'une des revendications 1–3, caractérisé par le fait que l'une (2, 60) des parties du carter comporte une aile (60) ménagée sur l'une (2) des pièces tubulaires de raccordement, et l'autre partie de carter (3, 61) comporte une pièce (61) en forme de cuvette, dans le fond de la cuvette de laquelle l'autre pièce tubulaire de raccordement (3) est ménagée, l'aile (60) et la pièce (61) en forme de cuvette délimitant la cavité, et le diamètre externe de la pièce (61) en forme de cuvette représentant, de préférence, au moins le double du diamètre externe des pièces tubulaires de raccordement (2, 3).

5. Dispositif selon l'une des revendications 1–4, caractérisé par le fait que la partie de paroi souple et/ou élastique du compartiment consiste en un matériau (66) doué de l'élasticité du caoutchouc, de préférence en un élastomère qui est revêtu d'un métal (67), préférentiellement d'une feuille d'aluminium sur au moins une face.

6. Dispositif selon l'une des revendications 1–5, caractérisé par le fait que la partie de paroi souple et/ou élastique (66, 67) du compartiment est disposée dans une pièce (65) de la capsule (62), du type crible.

7. Dispositif selon la revendication 6, caractérisé par le fait que la pièce (65) du type crible forme le carter de la capsule (62) associativement à un couvercle (63).

8. Dispositif selon la revendication 7, caractérisé par le fait que le couvercle (63) est tourné vers la pièce tubulaire de raccordement (2) devant être reliée à une canalisation d'eau, et la pièce (65) du type crible est tournée vers la pièce tubulaire de raccordement (3) devant être reliée à une robinetterie ou à un embout.

9. Dispositif selon la revendication 7 ou 8, caractérisé par le fait que le couvercle (63) forme la partie de paroi rigide (63) du compartiment, et est équipé d'un raccord d'emplissage ou d'un clapet anti-retour (64), en vue de l'emplissage respectif par le gaz comprimé ou l'air comprimé.

10. Dispositif selon l'une des revendications 6–9, caractérisé par le fait que la pièce (65) du type crible présente la forme d'un chapeau.

11. Dispositif selon la revendication 10, caractérisé par le fait que la partie de paroi souple et/ou élastique (66, 67) du compartiment est réalisée, elle aussi, en forme de chapeau, et son bord est intercalé entre le bord de la pièce (65) du type crible en forme de chapeau, et le bord du couvercle (63), auquel elle est reliée de manière étanche; et par le fait que les deux parties de carter (2, 60, 3, 61) sont solidarisées par vissage de telle sorte que le bord de la partie de paroi souple et/ou élastique (66, 67) du compartiment soit comprimé, suite à la solidarisation vissée des deux parties de carter (2, 60, 3, 61), entre les bords du couvercle (63) et de la pièce (65) de la capsule revêtant la forme d'un crible, afin d'assurer, par cette compression, l'étanchéité de la liaison entre le couvercle (63) et la partie de paroi souple et/ou élastique (66, 67) du compartiment.

12. Dispositif selon l'une des revendications 1–11, caractérisé par le fait que la pression respective du gaz ou de l'air, dont le compartiment est empli, est approximativement égale à la pression d'écoulement régnant dans le réseau de conduits tubulaires.

*FIG. 1*

10

1

2

6

12

7

8

16

5

14  11  3

*FIG. 2*

12

1

22

26

28  27  25

30

21

29

24

20

23

FIG. 3

FIG. 4

FIG. 5

FIG. 6

FIG. 7